# EUROPÄISCHE PATENTSCHRIFT

(11) **EP 1 561 407 B1**
(45) Veröffentlichungstag und Bekanntmachung des Hinweises auf die Patenterteilung: **18.03.2009**
(21) Anmeldenummer: 05001888.6
(22) Anmeldetag: 31.01.2005
(51) Int. Cl.: A47J 31/44, B67D 1/07

(54) **Vorrichtung zur Erzeugung von Milchschaum**
Device for the production of milk foam
Dispositif pour la production du lait moussé

(30) Priorität: 06.02.2004 DE 102004006095
(43) Veröffentlichungstag der Anmeldung: 10.08.2005
(73) Patentinhaber: NIRO-PLAN AG, 4663 Aarburg (CH)
(72) Erfinder: Ioannone, Matteo, 8162 Steinmaur (CH); Hubacher, Andreas, 4852 Rothrist (CH)
(74) Vertreter: Lemcke, Brommer & Partner

(56) Entgegenhaltungen:
- EP-A- 1 374 748
- WO-A-20/04004523
- DE-A1- 19 955 195

## Beschreibung

Die Erfindung betrifft eine Vorrichtung zur Erzeugung von Milchschaum, insbesondere in Verbindung mit einer automatischen Kaffeemaschine, die eine Mischkammer aufweist, der über verschiedene Zuführleitungen zumindest Milch, Luft und Spülmedium zuführbar ist, wobei die Zuführung des Spülmediums zur Mischkammer zumindest teilweise über die Milchzuführleitung erfolgt.

Die Aufschäumung von Milch wird vor allem bei der Herstellung von Cappuccino, aber auch für andere Zwecke benötigt. Dabei wird grundsätzlich Milch mit Luft und Dampf vermischt. Problematisch ist dabei, dass diejenigen Leitungsabschnitte, die von der Milch, insbesondere der aufgeschäumten Milch, beaufschlagt werden, sich mit der Zeit zusetzen, weil die Milch dort antrocknet. Neben den dadurch verursachten funktionellen Störungen führen diese Ablagerungen auch zu einer sensorischen Beeinträchtigung wegen des gerinnenden Eiweißes und des Casein-Abbaus.

Zur Vermeidung derartiger Ablagerungen ist es bereits bekannt, die Mischkammer und die von Milch durchströmten Leitungen regelmäßig zu spülen. So ist beispielsweise in der DE 199 55 195 eine Kaffeemaschine beschrieben, bei der ein Spülmedium - im dortigen Ausführungsbeispiel Kaltwasser oder Dampf - sowohl durch die Milch-Zuführleitung als auch direkt in die Mischkammer hineingepumpt wird. Dabei kann der direkt in die Mischkammer eingeleitete Dampf wahlweise zu deren Reinigung oder zur Milcherhitzung bei der Getränkebereitung benutzt werden.

Diese bekannte Anlage hat sich zwischenzeitlich in der Praxis gut bewährt. Sie soll durch die vorliegende Erfindung hinsichtlich des Spül- und Reinigungseffektes weiter vervollkommnet werden. Zugleich soll sie sich durch hohe Funktionalität und kostengünstigen Aufbau auszeichnen.

Diese Aufgabe wird erfindungsgemäß dadurch gelöst, dass die Luftzuführleitung zumindest mit ihrem an die Mischkammer angeschlossenen Endabschnitt über ein Ventil wahlweise an eine Leitung mit Spülmedium anschließbar ist. Es soll also künftig nicht nur die unmittelbar mit Milch beaufschlagte Leitung, sondern auch die Luftzuführleitung gespült werden können. Hintergrund dieses zusätzlichen Spülvorganges ist folgender: Untersuchungen der Anmelderin haben ergeben, dass bei der Milchaufschäumung - vor allem bei hohen Temperaturen - der Schaum aus der Mischkammer in die Luftzuführleitung eindringen kann. Somit ist überraschend auch die Luft-Zuführleitung eine eventuelle Quelle sensorischer Beeinträchtigung. Dieses Risiko wird durch die erfindungsgemäße Spülung der Luftzuführleitung eliminiert.

Das genannte Ventil, über das die Luftzuführleitung an ein Spülmedium anschließbar ist, wird deutlich beabstandet zur Mischkammer positioniert und auf einem höher liegenden Niveau. Dadurch wird sichergestellt, dass derjenige Bereich der Luftleitung, in den der Milchschaum möglicherweise eindringt, mit Sicherheit von Spülmedium beaufschlagt wird.

Hinsichtlich der konstruktiven Ausbildung des genannten Ventils empfiehlt es sich, dass es die Luftleitung wahlweise mit einer Luftquelle oder dem Spülmedium verbindet. Mit anderen Worten: Das Ventil stellt entweder eine Verbindung zur Luftquelle her bei gleichzeitiger Absperrung des Spülmediums oder es stellt eine Verbindung zum Spülmedium her bei gleichzeitiger Absperrung der Luftquelle. Hierfür kann im einfachsten Fall ein Doppelventil eingesetzt werden, das an ein gemeinsames Betätigungsglied, insbesondere den üblichen Elektromagneten, angeschlossen ist.

Als Spülmedium für die Luftzuführleitung kommt grundsätzlich jedes geeignete Medium in flüssiger Form oder Gasform in Betracht. Zweckmäßig wird das ohnehin für die Spülung der Milchzuführleitung vorhandene Medium auch für die Luftzuführleitung eingesetzt. Besonders günstig ist es dabei, wenn als Spülmedium zunächst kaltes Wasser oder eine Lösung mit Chemikalien-Zusatz, danach Dampf oder Druckluft zum Freiblasen verwendet wird.

Die Auslösung des Spülvorganges der Luftzuführleitung und zweckmäßig auch der Milchzuführleitung kann über eine Zeitsteuerung erfolgen, die nach jeder Getränkezubereitung oder nach einer vorgegebenen Anzahl von Zubereitungen automatisch die Spülung bewirkt. Dabei empfiehlt es sich, die Auslösung des Spülvorganges auch davon abhängig zu machen, dass kein Trinkgefäß unter dem Auslauf der Kaffeemaschine steht, was durch entsprechende Sensoren überwacht werden kann.

Schließlich empfiehlt es sich in Weiterbildung des Erfindungsgedankens, dass stromabwärts des genannten Ventils in der Luftzuführleitung, insbesondere im Eintrittsbereich in die Mischkammer ein Rückschlagventil in der Luftzuführleitung angeordnet ist. Dieses Rückschlagventil verringert das Eindringen von Milch und somit auch den erforderlichen Spül- und Reinigungsaufwand.

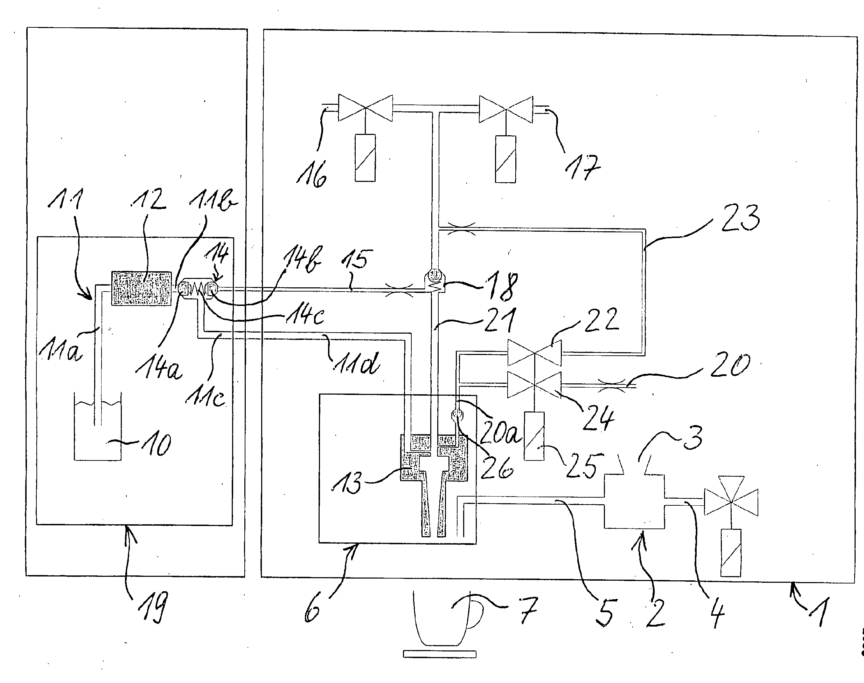

Weitere Merkmale und Vorteile der Erfindung ergeben sich aus den Verfahrensansprüchen und der nachfolgenden Beschreibung eines Ausführungsbeispieles und aus der Zeichnung selbst.

In der Zeichnung ist das Fließschema für eine Kaffeemaschine mit der erfindungsgemäßen Spüleinrichtung dargestellt.

Man erkennt in der Zeichnung rechts einen großen umrandeten rechteckigen Bereich, der eine Kaffeemaschine 1 andeutet. Sie weist auf ihrer rechten unteren Seite eine Brühgruppe 2 mit Kaffeezufuhr 3 und Heißwasserzufuhr 4 auf, von der ausgehend der aufgebrühte Kaffee über eine Kaffeeleitung 5 in einen Auslauf 6 transportiert und von dort in eine unter dem Auslauf positionierte Kaffeetasse 7 gegeben wird.

Die Milch ist in einem Aufbewahrungsbehälter 10 gelagert und wird über eine Milchleitung 11 von einer Pumpe 12 in eine Mischkammer 13 transportiert, die ebenfalls im Bereich des Auslaufs der Kaffeemaschine oberhalb der Kaffeetasse 7 vorgesehen ist. Die Milchleitung 11 gliedert sich im wesentlichen in vier Abschnitte, nämlich in den Abschnitt 11a zwischen dem Aufbewahrungsbehälter 10 und der Pumpe 12, in den Bereich 11b zwischen der Pumpe 12 und einem nachfolgend näher beschriebenen Spülleitungsanschluss 14, in den Abschnitt 11c zwischen dem Spülleitungsanschluss 14 und einer ebenfalls nachfolgend näher beschriebenen Kühlungsgrenze sowie in den Abschnitt 11d zwischen der Kühlungsgrenze und der Mischkammer 13.

Der erwähnte Spülleitungsanschluss 14 verbindet die Milchleitung 11 mit einer Spülleitung 15, die an eine Kaltwasserzufuhr 16 und an eine Dampfzufuhr 17 angeschlossen ist, so dass Kaltwasser bzw. Dampf als Spülmedium dienen. Der Spülleitungsanschluss 14 ist als doppelt wirkendes Rückschlagventil ausgebildet mit zwei kugelförmigen Ventilkörpern 14a, 14b und einer beide Ventilkörper gegen die Einlässe der angeschlossenen Milch- bzw. Spülleitung vorspannenden Feder 14c.

Wird die Milchpumpe 12 betätigt, so wird der die Milchzuleitung abdichtende Ventilkörper 14a entgegen der Federkraft weggedrückt und gibt die Milchleitung frei, so dass die Milch über die Abschnitte 11c und 11d in die Mischkammer 13 fließen kann. In ähnlicher Weise führt ein Öffnen der Kaltwasser- bzw. Dampfzufuhr 16 bzw. 17 dazu, dass ein weiteres Rückschlagventil 18 den Weg des Wassers bzw. des Dampfs in die Spülleitung 15 freigibt, so dass der den Eintritt der Spülleitung in den Spülleitungsanschluss 14 versperrende Ventilkörper 14b entgegen der Federkraft des Federelements 14c nach innen gedrückt wird und das Spülmedium über die Abschnitte 11c und 11d der Milchleitung 11 in die Mischkammer strömen und diese spülen kann. Außerdem kann Kaltwasser bzw. Dampf vom Rückschlagventil 18 aus direkt über eine Wasser-/Dampfleitung 21 in die Mischkammer 13 geführt und somit zur direkten Reinigung der Mischkammer verwendet werden, der Dampf aber auch zur Erhitzung der Milch.

Die erwähnte Kühlungsgrenze ist durch das gestrichelte linke Rechteck 19 angedeutet, das einen gekühlten Bereich - insbesondere eines Kühlschranks - darstellt und den Milchaufbewahrungsbehälter 10, den Leitungsabschnitt 11a, die Pumpe 12, den Leitungsabschnitt 11b, den Spülleitungsanschluss 14 und den Leitungsabschnitt 11c umgibt und kühlt. Die Leitungsabschnitte 11a, 11b und 11c stellen somit insgesamt einen gekühlten Teilbereich der Milchzuführleitung 11 dar. Hierdurch wird die Milch in diesem gekühlten Bereich auf einer solch niedrigen Temperatur gehalten, dass die Entstehung von Milchsäure bzw. Casein unterbunden wird. Folglich müssen die gekühlten und von der Milch beaufschlagten Bereiche auch kaum gereinigt werden, so dass eine periodische Spülung mit Hilfe eines in den Milchaufbewahrungsbehälter gegebenen Milchreinigers ausreicht. Die dem Spülleitungsanschluss nachgeschalteten von der Milch beaufschlagten gekühlten und ungekühlten Bereiche, also der gekühlte Abschnitt 11c und der nach der Kühlungsgrenze liegende ungekühlte Teilbereich 11d der Milchleitung, können über den Dampf beziehungsweise das Kaltwasser gespült werden und dies problemlos in sehr kurzen Intervallen. Hierdurch ist in bekannter Weise eine nahtlose Reinigung aller von der Milch beaufschlagten Bereiche gewährleistet.

Wesentlich ist nun die an die Mischkammer 13 angeschlossene Luftzuführleitung 20. Sie liefert die zur Aufschäumung der Milch erforderliche Umgebungsluft und kann zugleich auch zur Entlüftung des Systems herangezogen werden. Diese Luftleitung 20 ist nun mit ihrem in die Mischkammer 13 mündenden Bereich 20a über ein Ventil 22 und eine Leitung 23 an ein Spülmedium angeschlossen, nämlich an die bereits genannte Kaltwasserzufuhr 16 bzw. Dampfzufuhr 17. Dadurch besteht die Möglichkeit, nicht nur die mit Milch beaufschlagten Leitungsabschnitte, sondern auch den in die Mischkammer mündenden Abschnitt 20a der Luftzuführleitung 20 jederzeit zu spülen. Gegebenenfalls kann sich an diesen Spülvorgang noch ein Freiblasen mit Luft aus einer in der Zeichnung nicht dargestellten Druckluftquelle anschließen.

Des weiteren erkennt man in der Zeichnung, dass die Luftzuführleitung 20 ein eigenes Ventil 24 aufweist und dass dieses Ventil mit dem zuvor genannten Ventil 22 kombiniert ist und über ein für beide Ventile gemeinsames Betätigungsglied 25 verstellt wird. Die Ventile sind derart zusammengeschaltet, dass entweder das Ventil 22 offen und das Ventil 24 geschlossen oder statt dessen das Ventil 22 geschlossen und das Ventil 24 offen ist.

Während die Einleitung von Wasser oder Dampf über die Ventile 16 bzw. 17 mittels in der Zeichnung nicht dargestellter Pumpen erfolgt, ist bei der Luftzuführung über die Leitung 20 keine Pumpe vorgesehen; vielmehr soll hier die Luft durch Unterdruck in der Mischkammer 13, insbesondere durch Anwendung des Venturiprinzips angesaugt werden. Es liegt aber selbstverständlich im Rahmen der Erfindung, die Leitung 20 an eine Druckluftquelle anzuschließen, insbesondere, wenn die Leitung nach Spülung mit einem flüssigen Spülmedium wieder trockengeblasen werden soll.

Schließlich zeigt die Zeichnung, dass in die Leitungen 15, 20 und 23 jeweils Blenden eingebaut sind, die zur Steuerung der Durchflussmengen dienen.

Zusammenfassend bietet die vorliegende Erfindung also den Vorteil, dass durch die Spülung der Luftzuführleitung 20 eine nochmalige Verbesserung der hygienischen und sensorischen Verhältnisse in der Kaffeemaschine erreicht wird, wobei kein zusätzlicher Zeitaufwand notwendig ist, da die Luftzuführleitung gleichzeitig mit der Milchzuführleitung gespült werden kann.

## Patentansprüche

1. Vorrichtung zur Erzeugung von Milchschaum, insbesondere in Verbindung mit einer automatischen Kaffeemaschine, wobei die Vorrichtung eine Mischkammer (13) aufweist, der über verschiedene Zuführleitungen (11, 20, 21) zumindest Milch, Luft und Spülmedium zuführbar ist, wobei die Zuführung des Spülmediums zur Mischkammer zumindest teilweise über die Milchzuführleitung (11) erfolgt,
**dadurch gekennzeichnet,**
**dass** die Luftzuführleitung (20) zumindest mit ihrem an die Mischkammer (13) angeschlossenen Endabschnitt (20a) über ein Ventil (22) wahlweise an eine Leitung (23) mit Spülmedium anschließbar ist und
**dass** das genannte Ventil (22) beabstandet zur Mischkammer (13) und auf einem höher gelegenen Niveau als diese angeordnet ist.

2. Vorrichtung nach Anspruch 1,
**dadurch gekennzeichnet,**
**dass** das genannte Ventil (22) zumindest den Endabschnitt (20a) der Luftzuführleitung (20) wahlweise mit einer Luftquelle oder dem Spülmedium verbindet.

3. Vorrichtung nach Anspruch 1,
**dadurch gekennzeichnet,**
**dass** das genannte Ventil (22) ein Doppelventil (22, 24) ist, das an ein gemeinsames Betätigungsglied (25) angeschlossen ist.

4. Vorrichtung nach Anspruch 1,
**dadurch gekennzeichnet,**
**dass** die Milchzuführleitung (11) und zumindest der Endabschnitt (20a) der Luftzuführleitung (20) an das gleiche Spülmedium anschließbar sind.

5. Vorrichtung nach Anspruch 1,
**dadurch gekennzeichnet,**
**dass** das Spülmedium zunächst eine Flüssigkeit, danach Luft, insbesondere ein Druckgas ist.

6. Vorrichtung nach Anspruch 1,
**dadurch gekennzeichnet,**
**dass** das genannte Ventil (22) zumindest an eine Zeitsteuerung angeschlossen ist, die den Spülvorgang auslöst.

7. Vorrichtung nach Anspruch 1,
**dadurch gekennzeichnet,**
**dass** stromabwärts des genannten Ventils (22) ein Rückschlagventil (26) im Endabschnitt (20a) der Luftzuführleitung (20) angeordnet ist.

8. Verfahren zum Spülen einer Vorrichtung zur Erzeugung von Milchschaum, die eine Mischkammer (13) aufweist, der über verschiedene Zuführleitungen (11, 20, 21) zumindest Milch, Luft und Spülmedium zugeführt werden kann, wobei das Spülmedium zumindest teilweise über die Milchzuführleitung (11) der Mischkammer (13) zugeführt wird,
**dadurch gekennzeichnet,**
**dass** auch die Luftzuführleitung (20), zumindest deren an die Mischkammer (13) angeschlossener Endabschnitt (20a) einem Spülvorgang unterzogen wird, wobei das Spülmedium über ein Ventil (22) der Luftzuführleitung (20) zugeführt wird und die Zuführung an einem Ort erfolgt, welcher beabstandet zur Mischkammer (13) und auf einem höher gelegenen Niveau als diese angeordnet ist.

9. Verfahren nach Anspruch 8,
**dadurch gekennzeichnet,**
**dass** der Spülvorgang zumindest des Endabschnittes (20a) der Luftzuführleitung (20) mit Flüssigkeit beginnt und dass am Ende durch Dampf und/oder Druckluft freigeblasen wird.

10. Verfahren nach Anspruch 8,
**dadurch gekennzeichnet,**
**dass** die Spülvorgänge für die Mitchzuführieitung (11) und die Luftzuführleitung (20) zumindest teilweise gleichzeitig durchgeführt werden.

## Claims

1. Apparatus for producing milk foam, in particular in connection with an automatic coffee machine, wherein the apparatus has a mixing chamber (13) to which at least milk, air and rinsing medium can be supplied via various supply lines (11, 20, 21), the supply of the rinsing medium to the mixing chamber taking place at least partially via the milk supply line (11), **characterised in that** the air supply line (20) at least with its end portion (20a) connected to the mixing chamber (13) can be selectively connected via a first valve (22) to a rinsing medium line (23), and that the said valve (22) is disposed at a distance from the mixing chamber (13) and at a higher level than the mixing chamber.

2. Apparatus as claimed in Claim 1, **characterised in that** the said valve (22) selectively connects at least the end portion (20a) of the air supply line (20) to an air source or to the rinsing medium.

3. Apparatus as claimed in Claim 1, **characterised in that** the said valve (22) is a double valve (22, 24) which is connected to a common actuating member (25).

4. Apparatus as claimed in Claim 1, **characterised in that** the milk supply line (11) and at least the end portion (20a) of the air supply line (20) can be connected to the same rinsing medium.

5. Apparatus as claimed in Claim 1, **characterised in that** the rinsing medium is first of all a liquid and thereafter air, in particular a compressed gas.

6. Apparatus as claimed in Claim 1, **characterised in that** the said valve (22) is connected at least to a time controller which triggers a rinsing process.

7. Apparatus as claimed in Claim 12, **characterised in that** a non-return valve (26) is disposed in the end portion (20a) of the air supply line (20) downstream from the said valve (22).

8. Method of rinsing apparatus for producing milk foam, the apparatus having a mixing chamber (13) to which at least milk, air, and rinsing medium can be supplied via various supply lines (11, 20, 21), the rinsing medium being supplied to the mixing chamber at least partially via the milk supply line (11), **characterised in that** the air supply line (20) at least with its end portion (20a) connected to the mixing chamber (13) is subjected to a rinsing process, wherein the rinsing medium is supplied via a valve (22) to the air supply line (20) and the supply takes place at a location which is disposed at a distance from the mixing chamber (13) and at a higher level than the mixing chamber.

9. Method as claimed in Claim 8, **characterised in that** the rinsing operation for at least the end portion (20a) of the air supply line (20) begins with liquid and at the end is blown clear with steam and/or compressed air.

10. Method as claimed in Claim 8, **characterised in that** the rinsing processes for the milk supply line (11) and the air supply line (20) are carried out at least partially simultaneously.

## Revendications

1. Dispositif de production de mousse de lait, notamment en association avec une cafetière automatique, ledit dispositif comportant une chambre de mélange (13) à laquelle au moins du lait, de l'air et un agent de rinçage peuvent être délivrés par l'intermédiaire de différents conduits d'arrivée (11, 20, 21), la délivrance de l'agent de rinçage à ladite chambre de mélange ayant lieu, au moins en partie, par l'intermédiaire du conduit (11) d'arrivée du lait,
**caractérisé par le fait**
**que** le conduit (20) d'arrivée de l'air peut être sélectivement raccordé au conduit (23) charriant de l'agent de rinçage, par l'intermédiaire d'une soupape (22), au moins par son tronçon d'extrémité (20a) relié à la chambre de mélange (13) ; et
**que** ladite soupape (22) est située à distance de la chambre de mélange (13), et à un niveau plus haut que cette dernière.

2. Dispositif selon la revendication 1,
**caractérisé par le fait**
**que** la soupape (22) précitée relie, sélectivement, au moins le tronçon d'extrémité (20a) du conduit (20) d'arrivée de l'air à une source d'air ou à l'agent de rinçage.

3. Dispositif selon la revendication 1,
**caractérisé par le fait**
**que** la soupape (22) précitée est une soupape double (22, 24) raccordée à un organe commun d'actionnement (25).

4. Dispositif selon la revendication 1,
**caractérisé par le fait**
**que** le conduit (11) d'arrivée du lait, et au moins le tronçon d'extrémité (20a) du conduit (20) d'arrivée de l'air, peuvent être raccordés au même agent de rinçage.

5. Dispositif selon la revendication 1,
**caractérisé par le fait**
**que** l'agent de rinçage se présente tout d'abord comme un liquide, puis comme de l'air, notamment comme un gaz pressurisé.

6. Dispositif selon la revendication 1,
**caractérisé par le fait**
**que** la soupape (22) précitée est au moins raccordée à une commande de synchronisation déclenchant le processus de rinçage.

7. Dispositif selon la revendication 1,
**caractérisé par le fait**
**qu'**un clapet antiretour (26) est logé dans le tronçon d'extrémité (20a) du conduit (20) d'arrivée de l'air, en aval de la soupape (22) précitée.

8. Procédé de rinçage d'un dispositif de production de mousse de lait muni d'une chambre de mélange (13) à laquelle au moins du lait, de l'air et un agent de rinçage peuvent être délivrés par l'intermédiaire de différents conduits d'arrivée (11, 20, 21), l'agent de rinçage étant, au moins partiellement, délivré à ladite chambre de mélange (13) par l'intermédiaire du conduit (11) d'arrivée du lait,
**caractérisé par le fait**
**que** le conduit (20) d'arrivée de l'air, au moins le tronçon d'extrémité (20a) de ce dernier qui est raccordé à la chambre de mélange (13), sont eux aussi soumis à un processus de rinçage, sachant que l'agent de rinçage est délivré audit conduit (20) d'arrivée de l'air par l'intermédiaire d'une soupape (22), et que ladite délivrance a lieu en un emplacement situé à distance de la chambre de mélange (13) et à un niveau plus haut que cette dernière.

9. Procédé selon la revendication 8,
**caractérisé par le fait**
**que** le processus de rinçage, concernant au moins le tronçon d'extrémité (20a) du conduit (20) d'arrivée de l'air, débute par du liquide ; et par le fait qu'une chasse pneumatique s'opère en phase d'achèvement, par de la vapeur et/ou de l'air comprimé.

10. Procédé selon la revendication 8,
**caractérisé par le fait**
**que** les processus de rinçage, concernant le conduit (11) d'arrivée du lait et le conduit (20) d'arrivée de l'air, sont exécutés au moins partiellement en simultanéité.
